# EUROPEAN PATENT SPECIFICATION

(11) **EP 3 160 870 B1**
(45) Date of publication and mention of the grant of the patent: **28.02.2018**
(21) Application number: 15731294.3
(22) Date of filing: 22.06.2015
(51) Int. Cl.: B65D 85/72

(54) **DISPENSING SYSTEM**
ABGABESYSTEM
SYSTÈME DE DISTRIBUTION

(30) Priority: 25.06.2014 EP 14173992
(43) Date of publication of application: 03.05.2017
(73) Proprietor: Nestec S.A., 1800 Vevey (CH)
(72) Inventor: NOTH, André, 1009 Pully (CH); AIT BOUZIAD, Youcef, 1026 Echandens (CH)
(74) Representative: Navarro Fernández, Maria Isabel
(86) International application number: PCT/EP2015/063913
(87) International publication number: WO 2015/197513

(56) References cited:
- WO-A1-2013/121421
- US-A- 5 305 923

## Description

### Field of the invention

The present invention is directed to a dispensing system providing edible products from a disposable container, preferably chilled or warm edible products, and more preferably chilled foamed products such as ice-cream, milkshakes, sorbets, whipped yoghurt or the like, having improved unctuosity, texture and visual appearance.

### Background of the invention

At present, the consumption of chilled products such as ice-cream, milkshakes, sorbets, whipped yoghurt or the like is increasing and is highly demanded by the consumer, who requests high quality products. Foaming these chilled products is a way of greatly enhancing the consumer experience, as unctuosity and texture of the final product is highly improved. Also, the addition of solid or liquid toppings would add heterogenity in the mouth feel and would improve the visual perception of the final product, therefore also greatly enhancing the consumer's experience.

Presently, chilled foamed products need to contain additives in order to keep the foam stable during the storage of these products until their consumption. However, such additives are not appreciated by the consumer when found in the ingredients lists and, even more, the foam gets a gelified aspect which is not at all appreciated by the consumer.

Another possibility is that the consumer foams his own product with an adequate equipment, typically an electric whisk, to obtain without additive a freshly foamed product. However, this equipment is time consuming and requires a thorough cleaning, so it is not attractive for the user. Moreover, when the consumer wants to add toppings, he needs to do this after the product has been foamed, opening the corresponding additive compartments, dispensing the additives in the foamed product and mixing them, which is also time consuming and not desirable for the consumer.

There are solutions known in the state of the art which allow the preparation of texturized frozen products in a reduced amount of time, departing from liquid initial ingredients at ambient temperature. An example is provided in EP 12190562.4 belonging to the same applicant, where a system allowing the preparation of fresh frozen products in a reduced time of around 5 minutes is described: the system in EP 12190562.4 comprises a device and a disposable container; the container comprises the liquid ingredients at ambient temperature to prepare the final product, and can also contain a disposable stirrer as an integral part. The preparation process encompasses cooling and mixing, as well as air incorporation, with the product staying in the original container. At the end of the preparation process, the final fresh product is ready to be enjoyed in the original container with the stirrer used as a spoon: this process is fully clean thanks to the fact that the product is never leaving the container, so it never touches the machine.

However, further improvements could be envisaged in the system described in EP 12190562.4, as will be further described.
- The system operates with one single chamber (that of the container) where simultaneous mixing and cooling takes place: however, for some products, it would be desirable to separate initial ingredients during their long storage at ambient temperature and only mix them before the preparation, to prevent protein aggregation and maximize foaming properties.
- Because the system of EP 12190562.4 operates with one single chamber, the possibility to automatically make products with different color contrasts and textures can be limited.
- Because the packaging containing the ingredients in the system of EP 12190562.4 is used as initial and final packaging, for products aimed at being foamed, the original container must have a large headspace (empty zone on the top of the un-foamed product) which means that the container is only partially-filled to allow the later increase in volume at processing, resulting in a larger volume of packaging needed.

It is known in the state of the art, as per WO 2013/121421 A1, a system for the preparation of cooled edible products where a receptacle comprising at least some of the ingredients for the final product is introduced in the system, these ingredients being later mixed and pre-cooled in a mixing chamber. This mixture is then allowed into a cooling chamber once a valve communicating the mixing and cooling chambers opens. The system has a unique outlet configured for dispensing the cooled edible product, typically by a handle operated by the user. This system also allows the use of several receptacles, containing different ingredients, introduced in the system for the final product: however, the operation in such a case requires that all the ingredients are introduced in the mixing chamber, and then transferred to a cooling chamber for being later cooled in the cooling chamber, so that the mixture of the product is not efficient and the range of final products that can be provided by such a system is very limited. Moreover, this process results in a low amount of air incorporated in the final product, which therefore has an unsatisfying final texture and a lower quality. A system as the one described in WO 2013/121421 A1 does not allow product diversity such as for example creating a multi-layered product configuration, with different texture and/or flavor for the different layers. In case such a configuration would be aimed at, the user would have to operate the system container per container, controlling the dispensing of each of the layers desired. It is clear that such a processing is not efficient, it is time consuming and not attractive for the user.

A similar reasoning as to what has been described would also be applicable for edible products which are consumed mainly hot or warm, such as hot fruit coulis, hot chocolate, soups, veloute, bouillons, sauces, etc.

Therefore, it would be desirable to provide a system which allows the preparation of chilled foamed products, or of warm or hot foamed products, with the possibility of adding different toppings, in a fully automatic manner and solving the drawbacks mentioned in the prior art.

### Summary of the invention

According to a first aspect, the invention refers to a disposable container 100 designed for being inserted into a machine 200 where edible products are prepared. The disposable container 100 comprises at least one or a plurality of ingredient compartments 10, each comprising at least one base ingredient for the preparation of the product targeted. The disposable container 100 comprises at least one processing compartment 20 arranged so as to receive simultaneously or sequentially at least part of the content of the ingredient compartments 10, possibly also receiving fluid 150 and/or air 140 from the machine 200. Also according to the invention, the processing compartment 20 further comprises a movable part 22 and a static part 21, such that the movable part 21 is movable with respect to the static part 21, preferably in rotation: when at least one base ingredient, possibly also the fluid 150 and/or the air 140 are driven in between the static part 21 and the movable part 22, they are mixed or they are driven under a certain level of shear stress that allows them to be both mixed and foamed.

The disposable container 100 can further comprise at least one or a plurality of additive compartments 30 comprising additives or toppings, which are dispensed directly into a dispensing output 60.

According to a second aspect, the invention refers to a machine 200 for preparing an edible product from a disposable container 100 as described previously. The machine 200 comprises a dispensing mechanism 220 arranged in such a way that it dispenses sequentially or simultaneously at least part of the content of at least one of the ingredient compartments 10 into the processing compartment 20 and optionally at least part of the content of at least one of the additive compartments 30 directly into a dispensing output 60.

The machine 200 further comprises driving means 270 which move dedicated means 271: the dedicated means 271 are designed in such a way that they are mechanically connectable to the movable part 22 to move it at a certain speed with respect to the static part 21, particularly to rotate it at a certain rotational speed with respect to the static part 21.

According to a third aspect, the invention refers to a system 300 comprising a machine 200 as described above for preparing an edible product from a disposable container 100, also as previously described.

According to a fourth aspect, the invention further describes a method for preparing an edible product from a disposable container 100 in a machine 200: the disposable container 100 comprises at least one ingredient compartment 10 with at least one base ingredient for the targeted product and a processing compartment 20 where the content of the ingredient compartments 10 is processed, possibly with air 140 and/or with fluid 150 provided into the processing compartment 20, or with none of these. The disposable container 100 also comprises identification means with the process parameters information for the preparation of the targeted product: the machine 200 comprises a dispensing mechanism 220 for dispensing the content of the ingredient compartments 10 into the processing compartment 20, driving means 270 for moving, preferably in rotation, the processing compartment 20 in order to process its content, and a control unit 260, retrieving the process parameters information from the disposable container 100 and adapting the process carried out in the machine 200 with the process parameters retrieved. These parameters are at least one or a combination of the following: dispensing sequence and dispensing flow rate of the dispensing mechanism 220, speed of the driving means 270, preferably rotational speed, flow rate of the air 140 provided into the processing compartment 20 and flow rate of the fluid 150 provided into the processing compartment 20.

### Brief description of the drawings

Further features, advantages and objects of the present invention will become apparent for a skilled person when reading the following detailed description of nonlimiting embodiments of the present invention, when taken in conjunction with the appended drawings, in which:
- Figs. 1a-1d: show schematically the main components of a disposable container in a dispensing system providing edible products according to the present invention.
- Fig. 2: shows the schematically the configuration and main components of the dispensing system providing edible products according to the present invention.
- Figs. 3a-3c: show schematically the cooling and heating done over the disposable container in a dispensing system providing edible products according to the present invention.
- Figs. 4a-4f: show different possible configurations of the processing compartment in a disposable container of a dispensing system providing edible products according to the present invention.

### Detailed description of exemplary embodiments

The present invention is directed to a *dispensing system 300* providing edible products from a disposable container 100 processed in a machine 200, as it will be further explained in detail.

Typically, according to the invention, chilled products are preferably served at a temperature comprised between 4°C and 6°C.

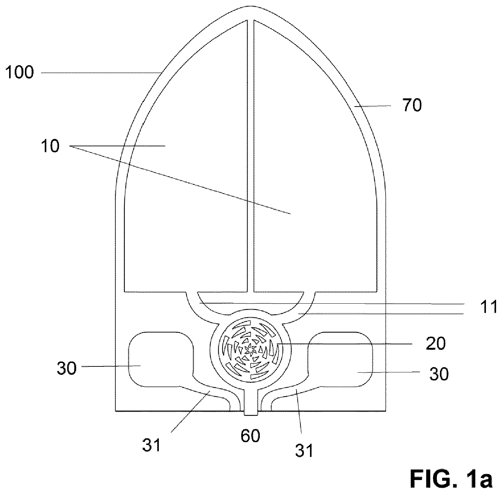

As shown in Figures 1a to 1d, the *disposable container 100* comprises at least one ingredient compartment 10, though it preferably comprises a plurality of ingredient compartments 10: the base ingredients are kept inside the plurality of ingredient compartments 10, separated from each other to prevent protein aggregation and maximize foaming properties. Typically, these base ingredients are kept in the ingredient compartments 10 in a concentrated form so that the packaging space in the disposable container 100 is minimized.

The disposable container 100 also comprises a processing compartment 20, into which the base ingredients from the ingredient compartments 10 are conveyed, through dedicated ingredient channels 11: the base ingredients are separately conveyed into the processing compartment 20, such that there is one ingredient channel 11 separately conveying each base ingredient from each one of the plurality of ingredient compartments 10 into the processing compartment 20.

The processing compartment 20 also comprises a static part 21 and a movable part 22, the movable part 22 being preferably rotatable with respect to the static part 21, similar to a rotor/stator configuration. The configuration of the movable part 22 and of the static part 21 are such that the movable part 22 moves without interfering with the static part 21. A fluid 150, preferably water, can be conveyed into the processing compartment 20 in order to dilute the concentrated base ingredients coming from the ingredient compartments 10. Simultaneously, air 140 can also be conveyed into the processing compartment 20, to be mixed with the fluid 150 and with the base ingredients from the ingredient compartments 10. Once the base ingredients and possibly the air 140, and also possibly the fluid 150 are in the processing compartment 20, the rotation of the movable part 22 with respect to the static part 21 mixes the base ingredients, possibly also the fluid 150 and/or the air 140 and can also simultaneously drive the mixture under high shear stress which further produces a foaming of these ingredients under Couette flow effect. Couette flow refers to a laminar flow of a viscous fluid in the space between two parallel plates, such that one plate is moving relative to the other. The flow is driven by shear force acting on the fluid comprised between the two plates, such that foaming energy is provided through high shear energy to this fluid, which is emulsified and further foamed. In the invention, the roles of the two plates moving relative to each other are performed by the movable part 22 moving with respect to the static part 21. The mixed and foamed product is provided through a dispensing output 60.

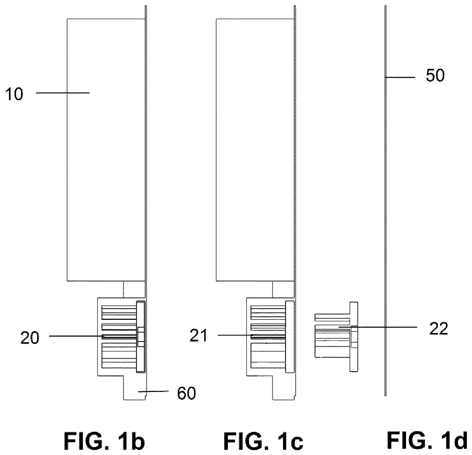

The disposable container 100 also comprises at least one or a plurality of additive compartments 30, comprising toppings or additives that are added directly through dedicated additive channels 31 into the dispensing output 60, to the mixed and foamed product. The toppings or additives can be either liquid or solid, and are also preferably stored in different separated additive compartments, so that they can be well preserved and do not mix between each other. Therefore, as shown in Figure 1, there is a dedicated additive channel 31 for each of the additive compartments 30 providing the additives or toppings.

As shown in Figure 1a, the disposable container 100 also comprises a main frame 70, preferably thermoformed, enclosing the plurality of ingredient compartments 10, the ingredient channels 11, the plurality of additive compartments 30, the additive channels 31, the static part 21 of the processing compartment 20 and the dispensing output 60.

Moreover, as shown in Figure 1d, the disposable container 100 also comprises a lid 50 closing one of the sides of the disposable container 100.

The ingredient compartments 10 and the additive compartments 30 are made of a material such that it is sufficiently flexible for being squeezed by a dispensing mechanism 220. At the same time, the disposable container 100 is made sufficiently rigid in its handling areas to be properly handled, and is also made sufficiently rigid in the processing compartment 20, where the process occurs. Under these requirements, the disposable container 100 can be manufactured by different options:
- a thermoformed blister configuring the ingredient compartments and the additive compartments 30, having a well-controlled thickness, together with an injected processing compartment 20 and lid 50, both made preferably of a plastic material;
- a combination of soft pouch compartments configuring the ingredient compartments 10 and the additive compartments 30, preferably attached to an injected plastic part surrounding these pouches, together with an injected processing compartment 20 and lid 50, both made preferably of a plastic material.

Clearly, it is required that the base ingredients in the ingredient compartments 10 and the additives in the additive compartments 30 do not leak once arranged inside these compartments. This tightness can be obtained by closing the ingredient channels 11 and the additive channels 31 once the lid 50, preferably made of plastic, is soldered onto them for closing one of the sides of the disposable container 100, in such a way that the ingredient channels 11 and the additive channels 31 will only open once high pressure is exerted by the dispensing mechanism 220, typically producing squeezing during the dispensing process, as will be further explained in detail. Another solution would be that the ingredient channels 11 and the additive channels would be arranged so as to allow their opening once a heating element in the machine 200 will unsolder the closure of these channels by melting the material bringing the channels together for a small amount of time: later, pressure will be applied in the ingredient compartments 10 and in the additive compartments 30 that will ensure a clear opening of these channels, i.e., will ensure a clear separation of the ingredient compartments 10 and of the additive compartments 30 with respect to the lid 50.

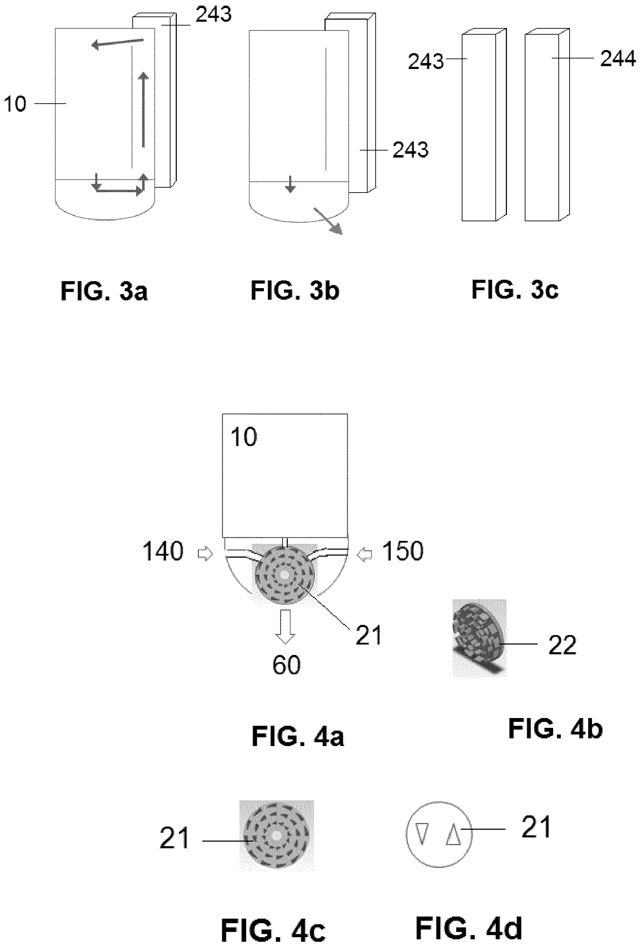

As shown in detail in Figures 4a to 4f, the processing compartment 20 of the disposable container 100 comprises a static part 21 and a movable part 22: these are designed specifically to process each product which will be obtained from the base ingredients comprised in the ingredient compartments 10. In fact, the base ingredients can be mixed with fluid 150, with air 140, with fluid 150 and air 140, or with none of these: these possible combinations will then be processed in the processing compartment 20 and be either diluted, foamed, or be diluted and foamed.

As such, the geometrical design of the static part 21 and the movable part 22 are different as a function of the product to be produced from the disposable container 100. As a matter of fact, the geometries needed to mix and foam yogurt, or cream in Chantilly or only to dissolve a coulis can be very different, thus requiring different geometries of the static part 21 and the movable part 22. Only one processing compartment 20 having a defined design of the static part 21 and of the movable part 22 can be provided, depending on the product to be obtained, or a plurality of different dedicated processing compartments 20 for the different ingredients in the ingredient compartments 10 will be provided, when these ingredients are processed very differently, so that they require different processing compartments 20. For example, Figures 4a, 4b and 4c show the geometrical configuration of the static part 21 and the movable part 22 when a dairy product is being both mixed and foamed within the processing compartment 20. Figure 4d shows the geometrical arrangement of the static part 21 for a smoothie, that is only going to be mixed (not foamed) in the processing compartment 20.

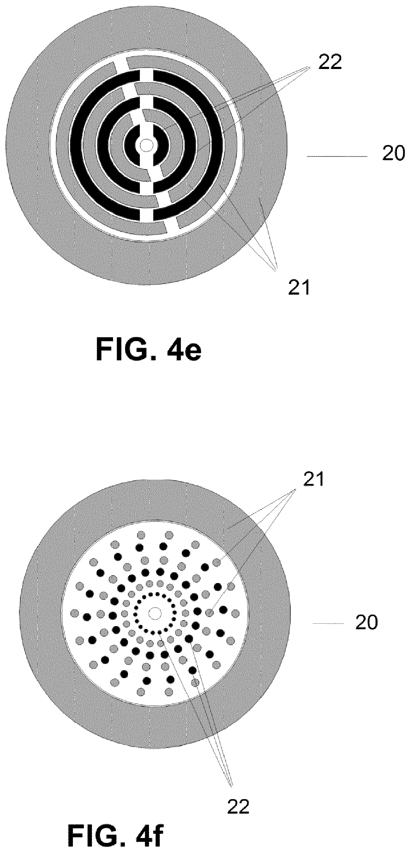

The geometries of the static part 21 and of the movable part 22, also determining the geometries of them when being coupled, depend on the product to be processed, typically to be foamed and mixed. Two examples of geometries, particularly in cross sections, are presented in Figures 4e and 4f, with the static part 21 having a lighter color and the movable part 22 having a darker one. In general, the distance of the elements configuring these parts, i.e., defining the free space allowed for the mixture to circulate, are a function of the viscosity of the product (more viscous the product, more distance is needed): for example, the dissolution of a fruit puree will require larger free spaces and larger distances between the configuring elements.

Figure 4e shows the combination of static part 21 and movable part 22 used for example to foam a very liquid milky product: the distances between the static part 21 and the movable part 22 are very small, in order to create high shear stresses. The low viscosity of the product poses no problem for the fluid to circulate or flow through these tight geometries.

Another example of the combination of static part 21 and movable part 22 is shown in Figure 4f, used to dilute a fruit puree with water: the distances between the static part 21 and the movable part 22 are much larger, allowing possible fruit pieces or pulp to flow without obstruction. Also, in this dilution process the shear stress is less important as the target is not to foam but to dilute homogeneously.

Typically, the disposable container 100 of the invention also comprises identification means, typically a code or a bar code, comprising the information for the optimum processing of the content in the disposable container 100 in the machine 200 of the present invention, as it will be explained more in detail. A control unit 260 is dedicated in the machine 200 for retrieving the information of the process parameters to be carried out to prepare the intended product from the identification means in the disposable container 100.

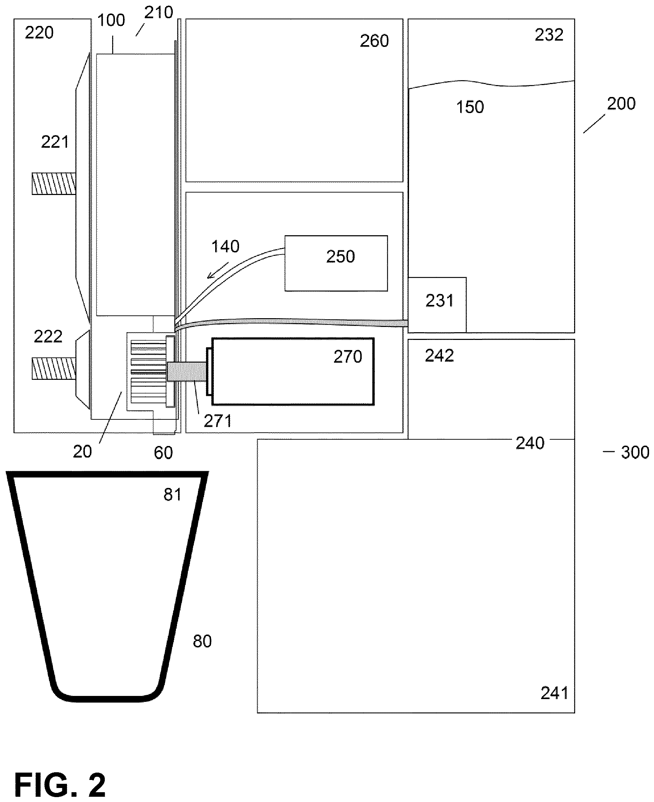

The disposable container 100 is processed in a *machine 200*: as shown in detail in Figure 2, the machine 200 comprises a receiving part 210 into which the disposable container 100 is inserted by the consumer, and is further processed by the machine 200. The machine 200 also comprises a dispensing mechanism 220 which is arranged in such a way that is able to dispense the content of the base ingredients from the ingredient compartments 10 into the processing compartment 20, and the content of the additive compartments 30 into the dispensing output 60. In fact, the dispensing mechanism 220 comprises an ingredient dispensing part 221 and an additive dispensing part 222, the ingredient dispensing part 221 dispensing the content of the base ingredients into the processing compartment 20 and the additive dispensing part 222 dispensing the content of the additive compartments 30 directly into the dispensing output 60. Preferably, according to the invention, the ingredient compartments 10 and the additive compartments 30 are conformed in such a way that the dispensing mechanism 220 is preferably configured as a squeezing mechanism which extracts and dispenses the content of the ingredient compartments 10 and of the additive compartments 30 by pressing dedicated elements over these compartments.

One possible configuration is that the ingredient dispensing part 221 comprises at least one piston which dispenses by being displaced over one of the ingredient compartments 10 at least part of the content of said ingredient compartment 10. The same piston or a different one can do the same process over each of the rest of the plurality of the container compartments 10, in a sequential way, thus allowing variations and different compositions of the final product dispensed. Similarly, the additive dispensing part 222 comprises at least a piston which displaces over the additive compartment 30, exerting pressure over it which dispenses the additive or topping stored in it.

Another possible alternative configuration is that the ingredient dispensing part 221 comprises at least one moving roller which rotates around its own axis and which simultaneously translates over the ingredient compartments 10 in such a way that it exerts pressure over the ingredient compartments so that the base ingredients stored in them are dispensed into the processing compartment 20. This configuration will allow a sequential dispensing of the base ingredients in the ingredient compartments 10 in its totality; in case the dispensing of only part of the content of the ingredient compartments 10 is desired, a moving roller can be placed in between two ingredient compartments 10, for example, being placed parallel to them, so that when the roller moves back and forward, under different lengths of movement, only part of the contents of each of the ingredient compartments 10 can then be dispensed, in a similar way as when pistons are used. Similarly, a moving roller can also be used for a final dispensing of the additives or topping in the additive compartments into the dispensing output 60. Other configurations are also possible, such as for example, having a moving roller arranged perpendicular to at least one or a plurality of ingredient compartments 10 such that the moving of the roller will simultaneously dispense the content of the at least one or plurality of ingredient compartments 10.

Moreover, several other possible alternative configurations for the dispensing of the ingredient compartments 10 and/or of the additive compartments 30 are apparent for a person skilled in the art to ensure the dispensing of the ingredients and/or of the additives into the processing compartment 20, such as for example the use of a peristaltic system acting directly on the ingredient channels 11 and/or on the additive channels 31.

The machine 300 further comprises driving means 270, preferably a motor, driving in rotation the processing compartment 20, particularly the movable part 22. The driving means 270 comprise a shaft 271 arranged in such a way that, once the dispensing container 100 has been allocated into the receiving part 210, the shaft 271 driven by the driving means 270, pierces the lid 50 of the disposable container 100 and enters into male/female contact with the movable part 22: therefore, the shaft 271 entrains in rotation the movable part 22 with respect to the static part 21.

The machine 300 also comprises an air pump 250, which pumps air 140 into the processing compartment 20, at a defined flow rate. Also, the machine 300 comprises a fluid reservoir 232, where fluid 150, preferably water, is stored: the machine 300 is also provided with a fluid pump 231, preferably a water pump 231, pumping fluid 150 from the fluid reservoir 232 into the processing compartment 20 in order to dilute the concentrated base ingredients coming from the ingredient compartments 10, at a defined flow rate.

The machine 300 also comprises a cooling unit 240, as represented schematically in Figure 2: the cooling unit 240 is preferably made of a vapor compression circuit 241, but can use several other technologies such as stirling compressor, thermoelectric cells (Peltier), etc. Independently from the technology used, the cooling unit 240 will comprise a cooling element 242, which is, in the preferred case of vapor, a compressor circuit, called evaporator. From here on, there are several possibilities to have the finally dispensed product cooled down, that can all be used separately or combined:
- First, the fluid 150 used for dilution can be cooled down. This can by realized either in a "batch process" by cooling down the entire water tank placing it in contact with the cooling element 242, or in a "continuous inline process" by using a heat exchanger combined with the cooling element 242 that will cool down only the water when being pumped.
- Secondly, the concentrate base ingredients can be cooled directly in the ingredient compartments 10 when they are stored at ambient temperature: the machine 200 comprises a cooling surface 243, cooled by the vapor compression circuit 241, which is placed in contact with the thin lid 50 of the disposable container 100, once this has been introduced in the receiving part 210 of the machine 300. In this way, the concentrate base ingredients inside the ingredient compartments 10 are cooled down by heat transfer with the vapor compression circuit 241.
- Thirdly, the disposable container 100 can be kept in the refrigerator already at a chilled temperature, so no cooling of the base ingredients in the ingredient compartments 10 is then needed. This can be measured using a temperature sensor placed in the machine 200 and in contact with the packaging lid 50.

The machine 200 can also comprise a heating surface 244 connected to a heating element (not shown): this heating surface 244 is in charge of heating certain additives stored in the additive compartments 30, such as chocolate or caramel, and which do not go through any process in the processing compartment 20, but which are provided directly through dedicated additive channels 31 into the dispensing output 60. Typically, these additives are provided melted and under a certain temperature, such as hot chocolate or hot caramel. The melting or heating operation of the additive compartments 30 can be done simultaneously, while the dispensing of the ingredients from the ingredient compartments 10 takes place to the processing compartment 20, in order to minimize the total processing time required.

Figures 3a to 3c show schematically the cooling and heating done in the disposable container 100 by the cooling surface 243 and the heating surface 244.

Moreover, according to the invention, the cooling unit 240 of the machine 200 can also cool the fluid 150 in the fluid reservoir 232: in this case, the fluid 150 (preferably water) added in the processing compartment 20 for diluting the concentrate base ingredients will be provided cold, at a certain controlled temperature. The fluid 150 can be cooled either in a "batch process", meaning that the fluid reservoir 232 is constantly cooled down by the cooling element 242, or can be cooled in a "continuous inline process", meaning that the fluid 150 in the fluid reservoir 232 is kept at ambient temperature and only the fluid that is going to be pumped into the processing compartment 20 is cooled down when travelling through the cooling element 242.

It is also possible that the machine 200 comprises a heating element which will heat the fluid 150 added into the processing compartment 20 to dilute the ingredients processed in it coming from at least one of the ingredient compartments 10. Therefore, this ingredient will exit the dispensing output 60 hot or warm, and this will be used when the system 300 is delivering hot or warm edible products. There is also the possibility to enhance this heating by further heating the ingredient compartments 10 by means of the heating surface 244, so that the ingredient dispensed in the processing compartment will be already warm or hot. Combinations of these two are also possible.

The machine 200 also comprises a control unit 260 which controls and drives the processing made by the machine 200 of the disposable container 100, as it will be explained in further detail. The control unit 260 comprises a user interface, dedicated sensors measuring the parameters to be controlled in the process, also comprising dedicated means for the recognition of the disposable container 100.

The invention also refers to a *method for preparing edible products* from a disposable container 100 using a dispensing system 300 as described before. As a way of example, the method carried out by the system 300 when preparing whipped yoghurt with fruit will be now explained in detail, as it follows.

First, a dedicated disposable container 100 is inserted in the receiving part 210 of the machine 200. A suitable output container 81 for receiving the final product is placed in the corresponding dispensing area 80 of the machine 200, as exemplified in Figure 2.

Then, the control unit 260 recognizes the disposable container 100 and reads the identification means or code in it, retrieving the targeted process parameters which are to be carried out by the machine 200: in fact, the process in the machine 200 is carried out in at least one or a plurality of steps or phases, each step being executed during a certain time. Therefore, the targeted process parameters given by the identification means in the disposable container 100 are provided for each of these steps, and are at least one or a combination of the following.
- Dispensing sequence and dispensing flow rate to be executed by the dispensing mechanism 220.
- Rotational speed to be provided by the driving means 270 to the shaft 271: when the disposable container 100 comprises more than one processing compartment 20, this rotational speed can vary depending on the processing compartment 20 engaged by the shat 271; also, this rotational speed can vary in time for a given step. In fact, this rotational speed is calculated as a function of the shear stress intended to be provided to the base ingredient coming from the ingredient compartment 10, therefore defining the foaming level achieved and also as a function of the mixing level required for this base ingredient together with the fluid 150, in case the base ingredient is both mixed and foamed in the processing compartment 20. In case the base ingredient is only mixed in the processing compartment 20, the rotational speed of the shaft 271 is then determined only as a function of the mixing level required.
- Flow rate of the air 140 to be provided by the air pump 250.
- Flow rate of the fluid 150 to be provided by the fluid pump 231.
- Optionally, cooling to be provided by the cooling unit 240, either to the cooling surface 243 and/or to cool the fluid 150 which will be further mixed in the processing compartment 20.
- Also optionally, heating to be provided to the heating surface 244, to heat or melt one or a plurality of additive compartments 30.

With the information retrieved from the identification means, the control unit 260 has the *targeted values* of the different steps to be carried out by the machine 200. Moreover, the machine 200 comprises dedicated sensors retrieving the information on the *real values* that are being carried out. These dedicated sensors provide at least one or a combination of the following parameters: dispensing sequence and flow rate of the dispensing mechanism 220, rotational speed of the shaft 271, flow rate of the air 140, flow rate of the fluid 150, temperature of the fluid 150 or of the cooling surface 243, and temperature of the heating surface 244. The control unit, during the process, retrieves the information of the real values from the dedicated sensors, compares it with the information of the targeted vales, and acts on the corresponding machine means (dispensing mechanism 220, driving means 270, air pump 250, fluid pump 231, cooling unit 242 and heating element) to adapt the real values to the targeted ones, under a certain allowed degree of variation.

After the control unit 260 has retrieved this information, the process starts: the dispensing mechanism 220 dispenses at least part of the content of at least one of the ingredient compartments 10 (possibly, several ingredient compartments 10 can be dispensed, at least partially, at the same time), so that the base ingredients enter the processing compartment 20 at a defined flow rate. Simultaneously, the air pump 250 pumps air 140 into the processing compartment 20, at a defined flow rate. Also simultaneously, the fluid pump 231 pumps fluid 150 at a defined flow rate into the processing compartment 20. Also occurring simultaneously, the driving means 270 entrain in rotation the movable part 22 in the processing compartment 20 with respect to the static part 21: this movement combined with the geometrical configuration of both the static and movable parts gives as a result high shear stress on the mixture (ingredient, air and fluid) processed, thus foaming it, and/or mixing capabilities for an effective mixture of these products.

The processed product is then directed towards the dispensing output 60, without having touched the machine 200.

At the end of the process, the additive compartments 30 comprising additives or toppings which do not need to go through the processing compartment 20 are dispensed by the additive dispensing part 222 in the dispensing mechanism 220, directly through the dispensing output 60. Optionally, the additive or topping provided can be provided in a melted or hot way, by the action of the heating surface 244. The final product is then provided by the machine 200 in the suitable output container 81.

In summary, the invention is directed to a dispensing system 300 producing a plurality of very high quality foamed chilled products such as ice-cream, milkshakes, sorbets, whipped yoghurt or the like, having improved unctuosity and texture, the system 300 comprising a disposable container 100 and a machine 200. The system also allows the addition of toppings or additives in a fully automatic manner, requiring no cleaning and being extremely attractive for the consumer. As described previously, the dispensing system 300 can also produce edible products which are consumed mainly hot or warm, such as hot fruit coulis, hot chocolate, soups, veloute, bouillons, sauces, etc.

The initial ingredients are separated in different ingredient compartments 10 in the disposable container 100 from which they are dispensed either sequentially or simultaneously into the processing compartment 20, also part of the disposable container 100. In this processing compartment 20 the product can be diluted with the fluid from the fluid reservoir 232, cooled by the cooling unit 240, foamed by the shear motion originated by the movable part 22 with respect to the static part 21 in the processing compartment 20, the final product being then dispensed through a dispensing output 60.

The system 300 according to the invention allows the preparation of freshly foamed single portioned desserts, in a reduced time, preferably below 5 minutes, and doesn't require any cleaning operation. Moreover, the system presents the following advantages:
- Separated initial ingredients for a better product quality
- Reduction of packaging volume if product are concentrated for a lower volume of packaging waste
- Sequencing of product dispensing for a better product quality
- Sequencing of product dispensing for an improved product visual

Also, one of the big advantages of the system 300 of the invention is the high level of homogeneity obtained in the product: because the flow rate of the ingredients from the ingredient compartments 10 and of the fluid 150 dispensed into the processing compartment 20 is controlled, the end results of the product obtained are very homogenous.

Although the present invention has been described with reference to preferred embodiments thereof, many modifications and alterations may be made by a person having ordinary skill in the art without departing from the scope of this invention which is defined by the appended claims.

### LIST OF REFERENCES

- **300**: **Dispensing system**
**100** **Disposable container**
10 Ingredient compartment
11 Ingredient channel
20 Processing compartment
21 Static part
22 Movable part
30 Additive compartment
31 Additive channel
50 Lid
60 Dispensing output
70 Frame
**200** **Machine**
210 Receiving part
220 Dispensing mechanism
221 Ingredient dispensing part
222 Additive dispensing part
270 Driving means
271 Shaft
250 Air pump
140 Air
231 Fluid pump
232 Fluid reservoir
150 Fluid
240 Cooling unit
241 Vapour compression circuit
242 Cooling element
243 Cooling surface
244 Heating surface
260 Control unit
81 Output container
80 Dispensing area

## Claims

1. Method for preparing an edible product from a disposable container (100) in a machine (200), the disposable container (100) comprising at least one ingredient compartment (10) with at least one base ingredient for the targeted edible product and a processing compartment (20) where the content of the ingredient compartments (10) is processed together with air (140) and a fluid (150) provided into the processing compartment (20), the disposable container (100) also comprising identification means with the process parameters information for the preparation of the targeted edible product, the machine (200) comprising a dispensing mechanism (220) for dispensing the content of the ingredient compartments (10) into the processing compartment (20), driving means (270) for moving the processing compartment (20) in order to process its content, and a control unit (260), retrieving the process parameters information from the disposable container (100) and adapting the process carried out in the machine (200) with the process parameters retrieved, such that these parameters are at least one or a combination of: dispensing sequence and dispensing flow rate of the dispensing mechanism (220), speed of the driving means (270), flow rate of the air (140) provided into the processing compartment (20) and flow rate of the fluid (150) provided into the processing compartment (20).

2. Method according to claim 1, wherein the method is sequenced into several phases during which different process parameters may be used, such that the transition between the phases is triggered by values coming from different dedicated sensors in the machine (200), and/or by an action triggerred by the user.

3. Method according to any of the previous claims, wherein at least part of the content of the ingredient compartments (10) is received simultaneously or sequentially by the processing compartment (20) further comprising a movable part (22) and a static part (21), the movable part (21) being movable with respect to the static part (21) such that the content of the ingredient compartments (10) and the fluid (150) and the air (140) are driven under a certain level of shear stress which allows them to mix, and/or to dilute and/or to foam.

4. Method according to claim 3, wherein the movable part (22) rotates with respect to the static part (21).

5. Method according to any of the previous claims, wherein information on at least one or a combination of the following parameters is provided to the machine (200) by the identification means: rotational speed of the movable part (22) with respect to the static part (21), dispensing sequence and/or flow rate of the ingredient compartments (10), flow rate of the air (140) provided into the processing compartment (20) and flow rate of the fluid (150) provided into the processing compartment (20).

6. Method according to any of claims 3-5, wherein the geometrical configuration of the rotational part (22) and that of the static part (21) are designed in such a way that they allow the mixing, and/or the dilution and/or the foaming of the content processed in it as a function of the viscosity of the at least one ingredient dispensed.

7. Method according to any of the previous claims, wherein the additives or toppings of at least one or a plurality of additive compartments (30) are dispensed directly into a dispensing output (60).

8. Method according to any of the previous claims, wherein at least one of the ingredient compartments (10) is deformable so as to allow the ingredient in it to be dispensed under compressive force exerted by the machine (200).

9. Method according to any of the previous claims, wherein compressive force allowing the sequential or simultaneous dispensing of the content of the at least one ingredient compartments (10) and the at least one additive compartments (30) is exerted by at least one piston arranged to be displaced over at least part of the at least one ingredient compartments (10) and optionally over at least part of the at least one additive compartments (30).

10. Method according to any of claims 1-8, wherein compressive force allowing the dispensing of the content of the at least one ingredient compartments (10) and of the at least one additive compartments (30) is exerted by at least one roller arranged to be displaced over the at least one ingredient compartments (10) and over the at least one additive compartments (30).

11. Method according to any of the previous claims wherein the fluid (150) which is dispensed into the processing compartment (20) is cooled by a cooling unit (240) cooling a cooling surface (243) which is placed in contact with the ingredient compartments (10), which cools the fluid (150).

12. Method according to any of the previous claims wherein the fluid (150) provided in the processing compartment (20) and/or a heating surface (244) which is placed in contact with the additive compartments (30) before their content is dispensed into the dispensing output (60) is heated by a heating element.

13. Method according to any of the previous claims adapting at least one or a combination of the following parameters by means of a control unit (260): dispensing sequence and/or dispensing flow rate of the dispensing mechanism (220), speed of the driving means (270), flow rate of the air (140) provided into the processing compartment (20), flow rate of the fluid (150) provided into the processing compartment (20), temperature of the fluid (150) and/or of the cooling surface (243) and temperature of the heating surface (244).

## Patentansprüche

1. Verfahren zum Zubereiten eines essbaren Produkts aus einem Einwegbehälter (100) in einer Maschine (200), wobei der Einwegbehälter (100) mindestens einen Inhaltsstoffbereich (10) mit mindestens einem Grundinhaltsstoff für das essbare Zielprodukt und einen Verarbeitungsbereich (20) umfasst, in dem der Inhalt der Inhaltsstoffbereiche (10) zusammen mit Luft (140) und einem Fluid (150), das in den Verarbeitungsbereich (20) bereitgestellt wird, verarbeitet wird, wobei der Einwegbehälter (100) auch ein Kennzeichnungsmittel mit den Prozessparameterinformationen für die Zubereitung des essbaren Zielprodukts umfasst, wobei die Maschine (200) einen Abgabemechanismus (220) zum Abgeben des Inhalts der Inhaltsstoffbereiche (10) in den Verarbeitungsbereich (20), ein Antriebsmittel (270) zum Bewegen des Verarbeitungsbereichs (20) für die Verarbeitung seines Inhalts und eine Steuereinheit (260) umfasst, die die Prozessparameterinformationen von dem Einwegbehälter (100) abruft und den in der Maschine (200) ausgeführten Prozess mit den abgerufenen Prozessparametern anpasst, derart, dass die Parameter mindestens eins oder eine Kombination der folgenden sind: Abgabesequenz und Abgabedurchflussrate des Abgabemechanismus (220), Geschwindigkeit des Antriebsmittels (270), Durchflussrate der Luft (140), die in den Verarbeitungsbereich (20) bereitgestellt wird, und Durchflussrate des Fluids (150), das in den Verarbeitungsbereich (20) bereitgestellt wird.

2. Verfahren nach Anspruch 1, wobei das Verfahren in mehrere Phasen sequenziert wird, in deren Verlauf verschiedene Prozessparameter verwendet werden können, derart, dass der Übergang zwischen den Phasen durch Werte, die von verschiedenen speziellen Sensoren in der Maschine (200) stammen, und/oder durch eine vom Benutzer ausgelöste Handlung ausgelöst wird.

3. Verfahren nach einem der vorstehenden Ansprüche, wobei mindestens ein Teil des Inhalts der Inhaltsstoffbereiche (10) gleichzeitig oder sequenziell von dem Verarbeitungsbereich (20) aufgenommen wird, der ferner einen beweglichen Teil (22) und einen statischen Teil (21) umfasst, wobei der bewegliche Teil (21) in Bezug auf den statischen Teil (21) beweglich ist, derart, dass der Inhalt der Inhaltsstoffbereiche (10) und das Fluid (150) und die Luft (140) unter einem bestimmten Maß an Scherbelastung und/oder zum Verdünnen und/oder zum Aufschäumen angetrieben werden.

4. Verfahren nach Anspruch 3, wobei sich der bewegliche Teil (22) in Bezug auf den statischen Teil (21) dreht.

5. Verfahren nach einem der vorstehenden Ansprüche, wobei Informationen zu mindestens einem oder einer Kombination der folgenden Parameter von dem Kennzeichnungsmittel an die Maschine (200) bereitgestellt werden: Drehzahl des beweglichen Teils (22) in Bezug auf den statischen Teil (21), Abgabesequenz und/oder Durchflussrate der Inhaltsstoffbereiche (10), Durchflussrate der Luft (140), die in den Verarbeitungsbereich (20) bereitgestellt wird, und Durchflussrate des Fluids (150), das in den Verarbeitungsbereich (20) bereitgestellt wird.

6. Verfahren nach einem der Ansprüche 3-5, wobei die geometrische Konfiguration des drehenden Teils (22) und die des statischen Teils (21) derart ausgelegt sind, dass sie das Mischen und/oder das Verdünnen und/oder das Aufschäumen des darin verarbeiteten Inhalts in Abhängigkeit von der Viskosität des mindestens einen abgegebenen Inhaltsstoffs zulassen.

7. Verfahren nach einem der vorstehenden Ansprüche, wobei die Zusatzstoffe oder Toppings von mindestens einem oder einer Vielzahl von Zusatzstoffbereichen (30) direkt in einen Abgabeausgang (60) abgegeben werden.

8. Verfahren nach einem der vorstehenden Ansprüche, wobei mindestens einer der Inhaltsstoffbereiche (10) verformbar ist, um zuzulassen, dass der Inhaltsstoff darin unter Druckkraft abgegeben wird, die von der Maschine (200) ausgeübt wird.

9. Verfahren nach einem der vorstehenden Ansprüche, wobei Druckkraft, die das sequenzielle oder gleichzeitige Abgeben des Inhalts der mindestens einen Inhaltsstoffbereiche (10) und der mindestens einen Zusatzstoffbereiche (30) durch mindestens einen Kolben ausgeübt wird, der dazu angeordnet ist, über mindestens einem Teil der mindestens einen Inhaltsstoffbereiche (10) und wahlweise über mindestens einem Teil der mindestens einen Zusatzstoffbereiche (30) verlagert zu werden.

10. Verfahren nach einem der Ansprüche 1-8, wobei Druckkraft, die das Abgeben des Inhalts der mindestens einen Inhaltsstoffbereiche (10) und der mindestens einen Zusatzstoffbereiche (30) durch mindestens eine Rolle ausgeübt wird, die dazu angeordnet ist, über den mindestens einen Inhaltsstoffbereichen (10) und wahlweise über den mindestens einen Zusatzstoffbereichen (30) verlagert zu werden.

11. Verfahren nach einem der vorstehenden Ansprüche, wobei das Fluid (150), das in den Verarbeitungsbereich (20) abgegeben wird, von einer Kühleinheit (240) gekühlt wird, die eine Kühlungsfläche (243) kühlt, die in Kontakt mit den Inhaltsstoffbereichen (10) angeordnet wird, was das Fluid (150) kühlt.

12. Verfahren nach einem der vorstehenden Ansprüche, wobei das Fluid (150), das in dem Verarbeitungsbereich (20) bereitgestellt wird, und/oder eine Heizfläche (244), die in Kontakt mit den Zusatzstoffbereichen (30) angeordnet wird, bevor der Inhalt in den Abgabeausgang (60) abgegeben wird, von einem Heizelement erwärmt wird.

13. Verfahren nach einem der vorstehenden Ansprüche, das mindestens einen oder eine Kombination der folgenden Parameter mittels einer Steuereinheit (260) anpasst: Abgabesequenz und/oder Abgabedurchflussrate des Abgabemechanismus (220), Geschwindigkeit des Antriebsmittels (270), Durchflussrate der Luft (140), die in den Verarbeitungsbereich (20) bereitgestellt wird, Durchflussrate des Fluids (150), das in den Verarbeitungsbereich (20) bereitgestellt wird, Temperatur des Fluids (150) und/oder der Kühlungsfläche (243) und Temperatur der Heizfläche (244).

## Revendications

1. Procédé de préparation d'un produit comestible à partir d'un contenant jetable (100) dans une machine (200), le contenant jetable (100) comprenant au moins un compartiment d'ingrédient (10) avec au moins un ingrédient de base pour le produit comestible ciblé et un compartiment de traitement (20) où le contenu des compartiments d'ingrédient (10) est traité conjointement avec de l'air (140) et un fluide (150) fournis dans le compartiment de traitement (20), le contenant jetable (100) comprenant également des moyens d'identification avec les informations de paramètres de traitement pour la préparation du produit comestible visé, la machine (200) comprenant un mécanisme de distribution (220) pour distribuer le contenu des compartiments d'ingrédient (10) dans le compartiment de traitement (20), des moyens d'entraînement (270) pour déplacer le compartiment de traitement (20) afin de traiter son contenu, et une unité de commande (260), récupérant les informations de paramètres de traitement du contenant jetable (100) et adaptant le processus exécuté dans la machine (200) aux paramètres de traitement récupérés, de sorte que ces paramètres sont au moins l'un ou une combinaison parmi : une séquence de distribution et un débit de distribution du mécanisme de distribution (220), une vitesse des moyens d'entraînement (270), un débit de l'air (140) fourni dans le compartiment de traitement (20) et un débit du fluide (150) fourni dans le compartiment de traitement (20).

2. Procédé selon la revendication 1, où le procédé est séquencé en plusieurs phases pendant lesquelles différents paramètres de traitement peuvent être utilisés, de sorte que la transition entre les phases est déclenchée par des valeurs provenant de différents capteurs dédiés dans la machine (200), et/ou par une action déclenchée par l'utilisateur.

3. Procédé selon l'une quelconque des revendications précédentes, dans lequel au moins une partie du contenu des compartiments d'ingrédient (10) est reçue simultanément ou séquentiellement par le compartiment de traitement (20) comprenant en outre une partie mobile (22) et une partie statique (21), la partie mobile (21) étant mobile par rapport à la partie statique (21), de sorte que le contenu des compartiments d'ingrédient (10) et le fluide (150) et l'air (140) sont entraînés avec un certain niveau de contrainte de cisaillement qui leur permet de se mélanger, et/ou de se diluer et/ou de mousser.

4. Procédé selon la revendication 3, dans lequel la partie mobile (22) tourne par rapport à la partie statique (21).

5. Procédé selon l'une quelconque des revendications précédentes, dans lequel des informations sur au moins l'un ou une combinaison des paramètres suivants sont fournies à la machine (200) par les moyens d'identification : la vitesse de rotation de la partie mobile (22) par rapport à la partie statique (21), la séquence et/ou le débit de distribution des compartiments d'ingrédient (10), le débit de l'air (140) fourni dans le compartiment de traitement (20) et le débit du fluide (150) fourni dans le compartiment de traitement (20).

6. Procédé selon l'une quelconque des revendications 3 à 5, dans lequel la configuration géométrique de la partie rotative (22) et celle de la partie statique (21) sont conçues de manière à permettre le mélange, et/ou la dilution, et/ou le moussage du contenu traité dans celles-ci en fonction de la viscosité dudit au moins un ingrédient distribué.

7. Procédé selon l'une quelconque des revendications précédentes, dans lequel les additifs ou les garnitures d'au moins un compartiment d'additif ou d'une pluralité de compartiments d'additifs (30) sont distribués directement dans une sortie de distribution (60).

8. Procédé selon l'une quelconque des revendications précédentes, dans lequel au moins l'un des compartiments d'ingrédient (10) est déformable de manière à permettre à l'ingrédient dans celui-ci d'être distribué grâce à une force de compression exercée par la machine (200).

9. Procédé selon l'une quelconque des revendications précédentes, dans lequel la force de compression permettant la distribution séquentielle ou simultanée du contenu dudit au moins un compartiment d'ingrédient (10) et dudit au moins un compartiment d'additif (30) est exercée par au moins un piston agencé pour être déplacé sur au moins une partie dudit au moins un compartiment d'ingrédient (10) et facultativement sur au moins une partie dudit au moins un compartiment d'additif (30).

10. Procédé selon l'une quelconque des revendications 1 à 8, dans lequel la force de compression permettant la distribution du contenu dudit au moins un compartiment d'ingrédient (10) et dudit au moins un compartiment d'additif (30) est exercée par au moins un rouleau agencé pour être déplacé sur ledit au moins un compartiment d'ingrédient (10) et sur ledit au moins un compartiment d'additif (30).

11. Procédé selon l'une quelconque des revendications précédentes, dans lequel le fluide (150) qui est distribué dans le compartiment de traitement (20) est refroidi par une unité de refroidissement (240) refroidissant une surface de refroidissement (243) qui est mise en contact avec les compartiments d'ingrédient (10), qui refroidit le fluide (150).

12. Procédé selon l'une quelconque des revendications précédentes, dans lequel le fluide (150) fourni dans le compartiment de traitement (20) et/ou une surface chauffante (244) qui est mise en contact avec les compartiments d'additifs (30) avant que leur contenu ne soit distribué dans la sortie de distribution (60), sont chauffés par un élément chauffant.

13. Procédé, selon l'une quelconque des revendications précédentes, adaptant au moins l'un ou une combinaison des paramètres suivants au moyen d'une unité de commande (260) : la séquence de distribution et/ou le débit de distribution du mécanisme de distribution (220), la vitesse des moyens d'entraînement (270), le débit de l'air (140) fourni dans le compartiment de traitement (20), le débit du fluide (150) fourni dans le compartiment de traitement (20), la température du fluide (150) et/ou de la surface de refroidissement (243) et la température de la surface de chauffage (244).
